(19) **Europäisches Patentamt / European Patent Office / Office européen des brevets**

(11) **EP 1 640 207 B1**

(12) **EUROPEAN PATENT SPECIFICATION**

(45) Date of publication and mention
of the grant of the patent:
**10.09.2008 Bulletin 2008/37**

(51) Int Cl.:
***B60N 3/04*** (2006.01)

(21) Application number: **04746347.6**

(22) Date of filing: **24.06.2004**

(86) International application number:
**PCT/JP2004/008878**

(87) International publication number:
**WO 2005/000630 (06.01.2005 Gazette 2005/01)**

(54) **FORMED MAT**

GEFORMTE MATTE

TAPIS FORME

(84) Designated Contracting States:
**AT BE BG CH CY CZ DE DK EE ES FI FR GB GR HU IE IT LI LU MC NL PL PT RO SE SI SK TR**

(30) Priority: **25.06.2003 JP 2003181331**

(43) Date of publication of application:
**29.03.2006 Bulletin 2006/13**

(73) Proprietor: **Hayashi Telempu Co., Ltd.**
**Nagoya-shi, Aichi 460-0013 (JP)**

(72) Inventors:
• **ARAGA, Toshitaka**
c/o Hayashi Telempu Co., Ltd.
**Nagoya-shi, Aichi 4600013 (JP)**

• **YAMADA, Takayoshi**
**Main Mill Toabo Material Co. Ltd**
**Mie 510-0105 (JP)**
• **KONDO, Shunsuke**
**Main Mill, Toabo Material Co.Ltd.**
**Mie 510-0105 (JP)**

(74) Representative: **Luderschmidt, Schüler & Partner**
**Patentanwälte**
**John-F.-Kennedy-Strasse 4**
**65189 Wiesbaden (DE)**

(56) References cited:
JP-A- 8 238 967    JP-A- 10 016 625
JP-A- 11 139 194    JP-U- 3 028 700
JP-U- 60 180 643    US-A- 4 828 898
US-B1- 6 296 075

**Description**

TECHNICAL FIELD

The present invention relates to a formed mat which is thermoformed so as to have a shape following the inside of a room of an automobile, for example a floor, and is fitted so as to follow the inside of the room.

BACKGROUND ART

Various types of mats fitted in rooms of automobiles have been conventionally used as interior trim to decorate floors of the rooms or the like. It is often required that an interior trim material to be fitted in the inside of a room of an automobile is made to a form of a formed mat which is formed into a shape following the inside of the room of the automobile. Among these formed mats, because a floor of an automobile often has comparatively large uneven portions, it is required that deep-draw-forming is given to a formed mat especially to be fitted on the floor. Many formed mats fitted on floors are conventionally tufted carpets or needle punched carpets and have thermoforming performance by backing the formed mats with thermoplastic resin having a low melting point or by containing low melting point thermoplastic resin fibers in the formed mats.

Further, in case of a formed mat especially fitted on a floor of an automobile among formed mats, because a ratio of a fitting area of the formed mat to an area of the whole internal surface of a room of the automobile is large, the formed mat is required to have sound performance for keeping the room of the automobile quiet, that is, sound absorption performance and sound isolation performance. This sound absorption performance denotes a function for absorbing sound waves existing in the room of the automobile and making the room quiet. To obtain this performance, a porous and multi-opening structural body is appropriate, and it is preferable to enlarge a volume (or thickness) of the body. In contrast, the sound isolation performance denotes a function for lowering noises (road noises or the like) entering from the outside of the automobile into the room through a floor panel of the automobile. To obtain this performance, a non-porous and high density structural body is appropriate.

As described above, a formed mat is required to have both high sound absorption performance and high sound isolation performance. Therefore, it is considered that a formed mat is formed into layers of a porous and multi-opening structural body having superior sound absorption performance and a non-porous and high density structural body having superior sound isolation performance. Particularly, it is preferable that a structural body having superior sound isolation performance is disposed on the outside of an automobile, and a structural body having superior sound absorption performance is disposed on the inside of the automobile so as to have a considerably large volume as a thick structural body.

Technical art relevant to the invention of the present application is disclosed in Japanese Patent Application Laid-Open No. 238967/96, (JP-A-08-238967) and Japanese Patent Application Laid-Open No. 2000-178816, (JP-A-2000-178816).

DISCLOSURE OF THE INVENTION

An object of the present invention is to provide a formed mat which is formed into layers of a non-porous and high density structural body having superior sound isolation performance and a porous and multi-opening structural body having superior sound absorption performance and a considerably large thickness and simultaneously has superior forming performance, superior cushion performance, superior sound absorption performance and superior sound isolation performance.

US-B1-6296075 discloses, a formed mat, according to the preamble of claim 1, which comprises a high elastic non-woven body and a thermoplastic resin sheet layered on a back surface of the high elastic non-woven body. The high elastic non-woven body is 3.0mm or more in thickness, 300g/m$^2$ or more in weight per unit area, and less than 0.20g/cm$^3$ in density. The thermoplastic resin sheet is thinner than the high elastic non-woven body.

In order to achieve the object of superior sound isolation performance, in a formed mat according to the present invention, the high elastic non-wowen body is layered as an upper most layer facing an inside of an automobile and further, because a high elastic non-woven body often receives friction with an occupant of a vehicle, a surface layer having wear resistance is formed at a surface of the non-woven body.

In this configuration, due to the high elastic non-woven body which has a low density resulting in sufficient cavities inside thereof and a sufficient thickness, high sound absorption performance can be obtained. Further, due to the thermoplastic resin sheet which has non-permeability of air, sound isolation performance can be obtained. As a result, a formed mat superior, as a whole, in both sound absorption performance and sound isolation performance can be obtained.

Further, as described above, there are large uneven portions in a panel of an automobile, especially a floor panel. To produce a formed mat having a shape which follows this panel, a portion of the formed mat is extended largely, or deep-draw-forming in a three dimensional shape is performed. Therefore, in a prior art, a porous and multi-opening material having sound absorption performance, which is formed so as to have a large volume or a great thickness, easily generates wrinkles and/or traces of folding in a forming process. In consideration of design, in the prior art, the material cannot be applied to a floor having a shape of large unevenness. In contrast, in the present invention, because the high elastic non-woven body described above is used as a material giving sound absorption performance to a formed mat, the formed mat can be formed so as to hardly generate such wrinkles or traces of folding. Accordingly, a formed mat according to the present invention can preferably be used for a floor having a shape of large unevenness.

Here, in the present invention, high elasticity in a non-woven body denotes a high recovery percentage of the body in shape against deformation such as bending or compression. As a yardstick of such elasticity, inventors of the present invention have found out that recovery percentage in a test of 180-degree folding can be preferably used. It is preferable that a recovery percentage in this folding test of the formed mat according to the present invention is 70% or more. Generation of wrinkles and/or traces of folding can be effectively suppressed, a forming performance can become suitable, and a formed mat having superior cushion performance can be obtained by making the formed mat have high elasticity of such a value. Moreover, because a high elastic non-woven body has high balkiness, the formed mat also having superior heat insulating performance can be obtained.

Further, as another yardstick of elasticity, recovery percentage against compression deformation can be used. Preferably, a formed mat according to the present invention has a recovery percentage of thickness (based upon JIS L 1096-1999) of 90% or more after a load of 1000g/cm$^2$ per unit area is applied to the formed mat for five minutes.

Elasticity of a formed mat can be heightened to the above-described degree by devising a raw material of a high elastic non-woven body and/or a machining process thereof. As a specific example, it is preferable that a high elastic non-woven body of a formed mat according to the present invention is a needle punched non-woven body which contains regular polyester fibers of 50 to 99 % by weight and polyester type low melting point fibers of 1 to 50 % by weight, the regular polyester fibers having a fiber diameter of 3 to 15 dtx and a length of 40 to 120 mm, the polyester type low melting point fibers having a fiber diameter of 3 to 12 dtx and a length of 40 to 90mm.

At this time, by using, as a regular polyester, two or more types of fibers having different fiber diameters, for example, a function for preventing wrinkles and/or heightening wear resistance can be given to fibers of larger diameter, and a function for forming a close texture and preventing a formed mat from being transparent can be given to fibers of smaller diameter. In this way, a formed mat, which can satisfy many requirements, can be obtained.

At this time, when fibers constituting the surface layer of wear resistance have a color tone different from fibers constituting other portions of the needle punched non-woven body, a decorative pattern can be given to a surface of the formed mat by partially taking out the fibers constituting the other portions of the needle punched non-woven body to the surface layer, and thereby a design performance can be improved.

BRIEF DESCRIPTION OF THE DRAWINGS

[Fig. 1] Figure 1 is a sectional view schematically showing configuration of a formed mat according to an embodiment of the present invention.

[Fig. 2] Figure 2 is a graph showing sound pressure measured in an automobile in which a formed mat in a fabrication example of the present invention and a comparative example is fitted.

[Fig. 3] Figure 3 is a schematical view showing a method of a formed mat folding test.

[Fig. 4] Figure 4 is a graph showing a recovery percentage against folding which is measured by performing a folding test for both a formed mat of the fabrication example of the present invention and a formed mat of the comparative example.

BEST MODE FOR CARRYING OUT THE INVENTION

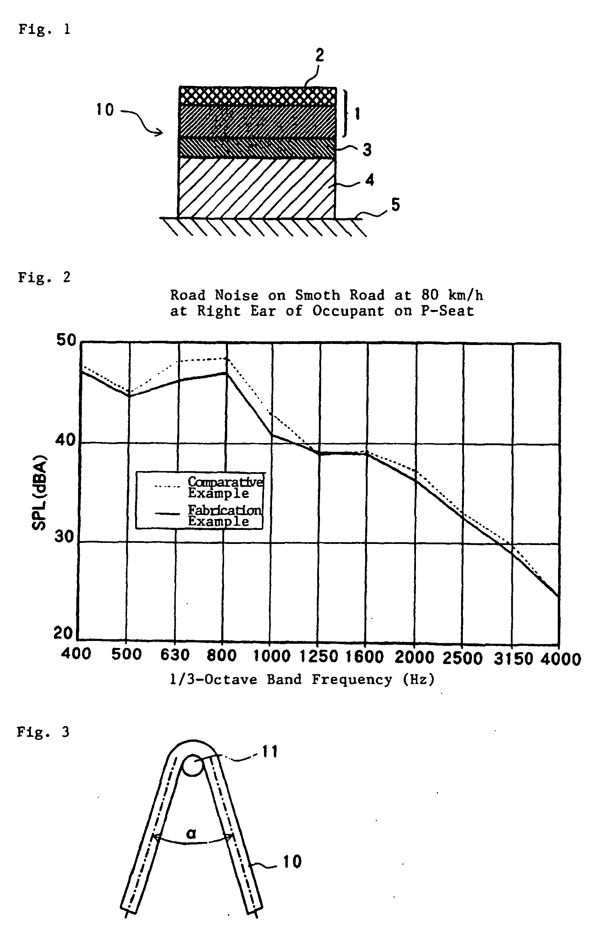

Formed mat 10 according to this embodiment can be used by fitting the mat on a door panel, a luggage panel, a dash panel, a roof panel, and the like as well as a floor panel of an automobile. Fig. 1 is a sectional view showing formed mat 10 fitted on panel 5 of an automobile.

As shown in Fig. 1, formed mat 10 is fitted on panel 5 through felt layer 4 which is optionally fitted between panel 5 and formed mat 10 as a buffer. Preferably, felt layer 4 is 10 to 50mm in thickness. Though a material used as a buffer is not limited to felt, it is preferable that a material having sound absorption performance similar to felt is used.

Formed mat 10 has thin thermoplastic resin sheet 3 which faces felt layer 4 and has a function for heightening sound isolation performance. And then, high elastic non-woven body 1 for heightening sound absorption performance is layered as an upper most layer facing an inside of an automobile. Wear resistance surface layer 2 suppressing wear is formed on a surface of high elastic non-woven body 1.

Hereinafter, configuration of each portion is described in more detail.

(Configuration of Each Portion)

Twining fibers of small diameter together by needling forms high elastic non-woven body 1 which has a structure of low density and many cavities and has a sufficient volume, that is, sufficient thickness. Thereby, a sound wave absorption performance of the body 1 is heightened. As described above, to accomplish a main object, that is, to heighten sound absorption performance and to enable sufficient absorption of sound waves existing in a room of an automobile during the running of the automobile, used high elastic non-woven body 1 is formed to be 3.0mm or more (more preferably, 5mm or more) in thickness, $300g/m^2$ or more (more preferably, $400g/m^2$ or more) in weight per unit area, and less than $0.20g/cm^3$ in density.

Further, it is required that high elastic non-woven body 1 has high elasticity so that wrinkles or traces of folding are not generated in high elastic non-woven body 1 facing a room of an automobile during deep-draw-forming to make formed mat 10 have a shape following panel 5 and to obtain superior outward appearance of formed mat 10. To prevent high elastic non-woven body 1 from generating wrinkles or traces of folding, as a result of examination, inventors of the present invention have found out that it is preferable that formed mat 10 is structured so as to reach a recovery percentage of 70% or more (more preferably, 85% or more) in a folding test described below.

In this folding test, a test piece having a predetermined shape (25mm in width and 100mm in length) is initially picked out from formed mat 10. And, a load is applied to the picked test piece to fold the picked test piece by 180 degrees around a straight line so as to face portions of thin thermoplastic resin sheet 3, placed on a back surface of the test piece, each other. The test piece is kept in a folded condition for five minutes. Thereafter, the load used to fold the test piece is removed. Then, as shown in Fig. 3, the test piece is immediately supported at a folding line on sufficiently thin wire rod 11, and an open angle-$\alpha$ between portions of the back surface of the test piece is measured at a time after five minutes. A recovery percentage is calculated according to an equation:

$$\text{recovery percentage (\%)} = (\alpha\,/180) \times 100.$$

When this folding test is performed, as the elasticity of the test piece is higher, a shape to which the test piece returns is nearer to an original shape of the test piece and therefore, the open angle $\alpha$ becomes large. In contrast, when the elasticity of the test piece is low, a shape of the test piece hardly returns toward the original shape, and therefore, the open angle $\alpha$ becomes small. Consequently, a recovery percentage estimated based on this folding test can be preferably used as a yardstick expressing elasticity of this type of fibrous material.

When making formed mat 10 have high elasticity so that its recovery percentage estimated based on this folding test is sufficiently high, traces of folding and/or wrinkles are hardly generated on a surface of formed mat 10 even though formed mat 10 receives deep-draw-forming to be formed into a shape following an element having large uneven portions such as panel 5, especially, a floor panel of an automobile. Further, in case of formed mat 10 having a large area, when formed mat 10 is fitted in the inside of a room of an automobile, formed mat 10 should be sometimes folded in order to put formed mat 10 into the room of the automobile before fitting formed mat 10. Even in this case, folding and/or wrinkles are hardly generated when the recovery percentage is sufficiently high.

To form non-woven sheet having large thickness, low density, many cavities and high elasticity as above-mentioned, a method for forming the sheet by twining fibers of small diameter together by needling is suitable. In this case, especially, use of regular polyester fibers of 50 to 99 % by weight and polyester type low melting point fibers of 1 to 50 % by weight is suitable, the regular polyester fibers having a fiber diameter of 3 to 15 dtx and a length of 40 to 120 mm, the polyester type low melting point fibers having a fiber diameter of 3 to 12 dtx and a length of 40 to 90mm.

The regular polyester fibers are synthetic fiber and have high strength. High elastic non-woven body 1 can easily have high elasticity by employing these fibers as a main material. In contrast, the polyester type low melting point fibers serve to connect the regular polyester fibers to one another at point portions thereof by slightly melting during a thermoforming process of formed mat 10. A mixture ratio between the regular polyester fibers and the polyester type low melting point fibers can be appropriately set within the range described above in accordance with a required forming shape of formed mat 10 or required physical properties of formed mat 10.

When the fiber diameter is too large, drawbacks occur that texture becomes rough, transparency is easily generated, and shape-following performance during formation of a non-woven body deteriorates. On the other hand, when the fiber diameter is too small, needling of them becomes difficult, elasticity is apt to become insufficient, and traces of folding and wrinkles are easily generated. Therefore, the range described above is preferable on balance of these factors. When the fiber length is too long or short, a carding process becomes difficult, and it becomes difficult to obtain high elastic non-woven body having predetermined physical properties. Therefore, the range described above is preferable.

In the high elastic non-woven body 1 formed as the needle punched non-woven body, the case may be particularly preferable where two or more types of fibers having different fiber diameters, especially two or more types of regular polyester fibers (in another case, nylon fibers, polypropylene fibers, or the like), are mixed together. Thereby, a function for preventing generation of wrinkles and/or a function for heightening wear resistance can be given to fibers of larger diameter, and functions for forming a close texture and for preventing the body from becoming transparent can be given to fibers of smaller diameter. As a result, it becomes possible to satisfy many required physical properties.

To form this type of high elastic non-woven body 1 which is 3.0mm or more (particularly, 5.0mm or more) in thickness and has a sufficiently low density, it is required to select most suitable fiber and to perform most suitable needling.

As such a needling technique, it is preferable that only a surface of a web, which is a raw material of high elastic non-woven body 1, is punched and made hard in a shallow and comparatively strong manner and needling of an inner layer of the web is minimized. Thereby, high elastic non-woven body 1 having low density and high elasticity can be formed. More specifically, a barb can act on only fibers existing on the surface of the web without acting on fibers of the inner layer of the web by appropriately adjusting the setting of the barb of a needling needle, and the surface layer of the web can be strongly punched and be made hard as compared with the inner layer. Further, wear resistance of the surface of the high elastic non-woven body 1 can be simultaneously improved by the above action. High elastic non-woven body 1, which has low density of less than 0.20g/cm$^3$ and high elasticity as in this embodiment, cannot be formed by other methods, for example in a method for performing uniform needling for an area from the surface layer to the inner layer.

Thin thermoplastic resin sheet 3 disposed on a back surface of high elastic non-woven body 1 has configuration of no opening and high density, and acts so as to suppress the entering of sound waves of outside noise to a room of an automobile from a side of panel 5 of the automobile. Especially, formed mat 10 fitted on a floor panel is required to perform such action. This thermoplastic resin sheet 3 can be formed by forming thermoplastic resin (polyethylene resin or the like) in a sheet shape and applying the resin on a back surface of high elastic non-woven body 1.

It is preferable that this thin thermoplastic resin sheet 3 be sufficiently thinned as compared with a thickness of high elastic non-woven body 1. That is, in the examination of the present inventors, it has been found that it becomes difficult to expand thermoplastic resin sheet 3 in a draw-forming (or thermoforming) process when thermoplastic resin sheet 3 is too thick. As a result, distortion remains in thick high elastic non-woven body 1 along a thick direction. Finally, this distortion emerges on a surface of formed mat 10 as wrinkles or folding. Accordingly, outward appearance of formed mat 10 can be maintained preferably by sufficiently thinning thermoplastic resin sheet 3. Especially, thickness of thermoplastic resin sheet 3 is 1/3 to 1/5 of thickness of high elastic non-woven body 1.

In a case where formed mat 10 is used as a floor mat of an automobile, feet of an occupant slightly sink in high elastic non-woven body 1 due to its elasticity. Therefore, formed mat 10 receives a comparatively hard friction with the feet of the occupant. Accordingly, especially in a case where formed mat 10 is used as a floor mat as described above, it is preferable that wear resistance surface layer 2 is formed on a surface of high elastic non-woven body 1 in order to suppress wear. In a preferable configuration, wear resistance surface layer 2 can be formed as a non-woven fabric containing (polyester type) low melting point fibers at a ratio higher than those in other portions of high elastic non-woven body 1 or as a non-woven fabric (100 to 300g/m$^2$ or more in weight per unit area) containing regular polyester fibers of a diameter larger than that of high elastic non-woven body, without largely changing sound absorption performance.

Wear resistance surface layer 2 can be structured by fibers having a color tone different from other portions of high elastic non-woven body 1. In this case, a decorative pattern can be formed on a surface of wear resistance surface layer 2 by performing needling from a surface and partially taking out some of fibers of high elastic non-woven body 1 to the surface of wear resistance surface layer 2. Formation of the decorative pattern is preferable because a design performance can be heightened. Further, an effect to make small wrinkles on the surface unnoticeable can be obtained.

Further, the inside of wear resistance surface layer 2 can be made in a two-layer structure by forming wear resistance surface layer 2 into a dual needle punched fabric.

Next, a method for forming formed mat 10 having the configuration described above according to this embodiment into a shape following panel 5 of an automobile is described.

(Forming Conditions)

When formed mat 10 is formed, polyester type low melting point fibers (melting points from 110 to 130°C) contained in high elastic non-woven body 1 and a layer of thermoplastic resin sheet 3 are softened in advance by preheating. The preheating performed from both sides of formed mat 10 is appropriate to the present invention, and it is useful to combine radiation heating from a side of a back surface of the formed mat and hot air heating from a side of a front surface of the formed mat. After such preheating, formed mat 10 in a partially softened condition is placed between a pair of press forming dies having a shape following a panel placed at an attaching position, and draw-forming is performed to make formed mat 10 have a required shape.

At this time, even if formed mat 10 is formed by using a pair of forming dies having a clearance smaller than a thickness of formed mat 10, the thickness of high elastic non-woven body 1 can sufficiently be recovered after formed mat 10 is taken out from the dies, by setting a compression elastic modulus (JIS L-1096) of high elastic non-woven body 1 at a high value of 85% or more. Accordingly, by configuring elastic non-woven body 1 such that it has sufficiently high elastic module, even if formed mat 10 is fitted on panel 5 having large uneven portions, formed mat 10 can be subjected to deep-draw-forming process while applying high pressure to formed mat 10 without loosing properties such as sound absorption performance of formed mat 10 so that formed mat 10 can be formed to have a shape suitably following panel 5.

Formed mat 10 described above according to this embodiment has superior sound absorption performance because high elastic non-woven body 1 has a comparatively low density, has sufficient cavities therein, and has a sufficient thickness. Further, formed mat 10 according to this embodiment is superior in sound isolation performance because thermoplastic resin sheet 3 having non-permeability of air and high density is layered. Formed mat 10 superior in sound absorption performance and sound isolation performance as described above is appropriate to a small automobile and a medium-sized automobile because such properties are especially required in the small and medium-sized automobiles.

Moreover, because high elastic non-woven body 1 has high elasticity, formed mat 10 according to this embodiment is superior in cushion performance and has soft touch feeling. Further more, this formed mat 10 has high shape maintaining performance. Therefore, even if formed mat 10 is fitted on a standing wall, a shape of formed mat 10 is hardly disturbed. Still further, because this formed mat 10 has sufficient cavities and volume, formed mat 10 is superior in heat insulating performance.

Further, high elastic non-woven body 1 has low density and high elasticity. Therefore, generation of wrinkles and folding, which is easily generated especially in a deep-draw-forming process in a prior art in a case where a layer having large volume for sound absorption performance is arranged, can be suppressed in formed mat 10 according to this embodiment.

Next, an example of actually fabricating a formed mat according to the present invention are described with a comparative example of forming a formed mat compared with the fabrication example and a result of comparison estimation between the fabrication example and the comparative example.

(Fabrication Example)

A needle punched non-woven body was fabricated as high elastic non-woven body 1 by employing short fibers having a composition shown in Table 1 and by twining these fibers according to a needling process. At this time, for $150g/m^2$ among a total weight per unit area of $650g/m^2$, wear resistance surface layer 2 was formed by mainly using polyester type low melting point fibers.

Low density polyethylene resin sheet (thickness of 0.4mm) having a weight per unit area of $500g/m^2$ was stuck as thermoplastic resin sheet 3 on a back surface of this high elastic non-woven body. Further, synthetic fiber felt (density of $0.055g/cm^3$) having a thickness of 20mm was stuck as felt layer 4. In this way, formed mat of a fabrication example was obtained.

(Comparative Example)

As a comparative example, a non-woven body was formed while a fiber composition was set to be the same as that of the fabrication example. However, as different points from the fabrication example, needling was performed in the fabrication example so as to punch a portion shallow from a surface, that is, punch a surface side in a comparatively strong manner, while normal needling was performed so as to punch the whole portion in the comparative example. As a result, a thickness of a formed non-woven body became a comparatively large value of 6.0mm (density of $0.10g/cm^3$) in the fabrication example, while a formed non-woven body was thinned to a thickness of 3.0mm (density of $0.20g/cm^3$) so that balkiness performance and cushion performance deteriorated in the comparative example.

A resin sheet and a felt layer (buffer material) to be stuck on a back surface were fabricated in the same manner as those in the fabrication example. In this way, a formed mat in the comparative example was obtained.

[Table 1]

|  |  fiber configuration | thickness (dtx) $\times$ length (mm) | mixture ratio (%) | weight per unit area (g/m$^2$) | thickness (mm) | density (g/cm$^3$) |
|---|---|---|---|---|---|---|
| wear resistance surface layer | regular polyester web | 6.6 $\times$ 64 | 90 | 150 | fabrication example 6.0 | fabrication example 0.10 |
|  | polyester type low melting point fibers | 4.4 $\times$ 51 | 10 |  |  |  |

(continued)

|  | fiber configuration | thickness (dtx) × length (mm) | mixture ratio (%) | weight per unit area (g/m$^2$) | thickness (mm) | density (g/cm$^3$) |
|---|---|---|---|---|---|---|
| main layer (lower layer) | regular polyester web | 6.6 × 64 | 25 | 500 | comparative example 3.0 | comparative example 0.20 |
|  | polyester type low melting point fibers | 4.4 × 51 | 30 |  |  |  |
|  | regular polyester web | 9.0 × 64 | 45 |  |  |  |

(Estimation Method)

• Recovery Percentage

A recovery percentage against bending was estimated according to the 180-degree folding test described above. In this case, test pieces were picked out along a longitudinal direction and a lateral direction, respectively, and estimations were performed for each test piece. Further, a recovery percentage against compression was observed and estimated based upon JIS L 1096-1999 (recovery percentage in thickness after 5 minutes from a time at which initial load of 2g/cm$^2$ and heavy load of 1000g/cm$^2$×5 minutes were applied).

• Forming Performance
The formed mat in each of the fabrication example and the comparative example was draw-formed into a shape following a floor of a small automobile having deep unevenness portion (maximum of 300mm), and outward appearance, shape following performance after forming, and the like were estimated by a visual inspection.

• Sound Performance
After formed mats in the fabrication example and the comparative example were formed as described above, each formed mat was fitted on a floor of a small automobile, and a running condition reproduction test (smooth road, constant speed running condition of 80km/h) using a chassis dynamo was performed. At this time, a sound pressure measuring device was put at a position of an ear of an occupant in a room of an automobile, and sound pressure at each of frequencies was measured.

(Result of Estimation)

• Recovery Percentage

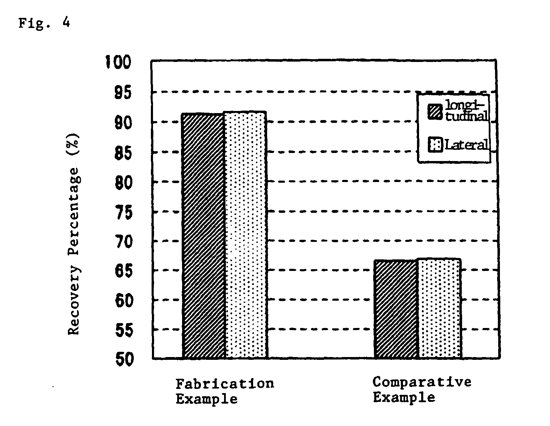

A recovery percentage against bending is shown in Fig. 4. In the fabrication example, a recovery percentage is above 90%. In contrast, a recovery percentage is below 70% in the comparative example. In this way, a remarkable difference was shown. In this test, there was little difference between a case of longitudinal direction and a case of lateral direction. Further, a recovery percentage against compression was about 95% in the fabrication example and was 90% or less in the comparative example.

In this way, it was found that a plasticity property was strong in the comparative example, but an elasticity property was heightened in the fabrication example.

• Forming Performance
The formed mat of the fabrication example was able to be correctly formed into a shape which suitably follows a shape of a deep unevenness portion. Further, problems about outward appearance such as wrinkles, traces of folding, and the like were not found.

In contrast, in the formed mat of the comparative example, after forming, a portion for a standing wall is intended to be easily fallen. Further, in a deep-draw-formed portion, small traces of folding were generated on a surface of the mat, so that outward appearance deteriorated.

• Sound Performance
Sound pressure (SPL) of sounds ranging from 400 to 4000 Hz, which was observed in a condition that the formed mat of each of the fabrication example and the comparative example was fitted, is shown in Fig. 2.

It was ascertained that sound pressure in a case of fitting the formed mat of the fabrication example was several dBA lower than that in the comparative example. Especially, it is realized that a difference in sound pressure between the fabrication example and the comparative example becomes large in a frequency range from 500 to 1250Hz. These results denote that sound absorption performance and sound isolation performance in the formed mat of the fabrication example are simultaneously improved as compared with in the comparative example, and noises in a room of an automobile are suppressed by a synergistic effect between sound absorption performance and sound isolation performance.

## Claims

1. A formed mat (10) which is thermoformed so as to have a shape following an inside of a room of an automobile and is fitted so as to follow the inside of the room, the formed mat comprises:

   a high elastic non-woven body (1) which is 3.0 mm or more in thickness, 300 g/m$^2$ or more in weight per unit area, and less than 0.20 g/cm$^3$ in density; and
   a thermoplastic resin sheet (3) which is layered to the high elastic non-woven body (1) and which is thinner than the high elastic non-woven body (1),

   **characterized in that** :

   the high elastic non-woven body (1) is layered on the thermoplastic resin sheet (3) so that a surface of the high elastic non-woven body (1) is directed to the inside of a room of an automobile, and
   a wear resistance surface layer (2) is formed on the surface of the high elastic non-woven body (1).

2. The formed mat according to claim 1, wherein the high elastic non-woven body (1) is a needle punched non-woven body which has regular polyester fibers of 50 to 99 % by weight and polyester type low melting point fibers of 1 to 50 % by weight, the regular polyester fibers having a fiber diameter of 3 to 15 dtx and a length of 40 to 120 mm, and the polyester type low melting point fibers having a fiber diameter of 3 to 12 dtx and a length of 40 to 90 mm.

3. The formed mat according to claim 2, wherein the needle punched non-woven body (1) contains, as the regular polyester fibers, two or more types of fibers having different fiber diameters.

4. The formed mat according to claim 1, wherein fibers constituting the surface layer (2) having wear resistance has a colour tone different from that of fibers constituting other portions of the needle punched non-woven body (1), and a decorative pattern is formed by partially taking out the fibers constituting the other portions of the needle punched non-woven body (1) onto the surface of the surface layer (2) having wear resistance.

5. The formed mat according to any one of claims 1 to 4, wherein a recovery percentage in a folding test is 70 % or more, wherein the recovery percentage denotes a ratio of an open angle around a folding line at a time when the formed mat is supported at the folding line and is leaved after the formed mat is folded by 180 degrees around a straight line so as to face portions of the thermoplastic resin sheet each other, to an original 180 degrees.

## Patentansprüche

1. Geformte Matte (10), die thermogeformt wird, so dass sie eine Form hat, welche der Innenseite eines Raumes in einem Automobil folgt und so angepasst ist, dass sie der Innenseite des Raumes folgt, wobei die geformte Matte aufweist:

   einen hochelastischen Vlieskörper (1), der 3,0 mm oder mehr dick ist, 300 g/m$^2$ oder mehr Gewicht pro Einheitsfläche hat und weniger als 0,20 g/cm$^3$ Dichte, und
   eine thermoplastische Harzfolie (3), welche auf den hochelastischen Vlieskörper (1) geschichtet ist und die dünner ist als der hochelastische Vlieskörper (1),

   **dadurch gekennzeichnet, dass:**

   der hochelastische Vlieskörper (1) auf die thermoplastische Harzfolie (3) so geschichtet ist, dass eine Oberfläche des hochelastischen Vlieskörpers (1) zur Innenseite eines Raumes eines Automobils hin gerichtet ist und eine abriebbeständige Oberflächenschicht (2) auf der Oberfläche des hochelastischen Vlieskörpers (1) gebildet wird.

2. Geformte Matte gemäß Anspruch 1, wobei der hochelastische Vlieskörper (1) ein genadelter Vlieskörper ist, der von 50 bis 99 Gew.-% reguläre Polyesterfasern hat und von 1 bis 50 Gew.-% polyesterartige Fasern mit niedrigem Schmelzpunkt, wobei die regulären Polyesterfasern einen Faserdurchmesser von 3 bis 15 dtx und eine Länge von 40 bis 120 mm haben und die polyesterartigen Fasern mit niedrigem Schmelzpunkt einen Faserdurchmesser von 3 bis 12 dtx und eine Länge von 40 bis 90 mm haben.

3. Geformte Matte gemäß Anspruch 2, wobei der genadelte Vlieskörper (1) als die regulären Polyesterfasern zwei oder mehr Arten von Fasern enthält, die unterschiedliche Faserdurchmesser haben.

4. Geformte Matte gemäß Anspruch 1, wobei Fasern, welche die Oberflächenschicht (2) bilden, die eine Abriebbeständigkeit haben, einen Farbton haben, der von demjenigen der Fasern verschieden ist, welche andere Teile des genadelten Vlieskörpers (1) bilden, und wobei ein dekoratives Muster gebildet wird, indem teilweise die Fasern, welche die anderen Teile des genadelten Vlieskörpers (1) bilden, auf die Oberfläche der Oberflächenschicht (2), die Abriebbeständigkeit hat, herausgenommen werden.

5. Geformte Matte gemäß irgendeinem der Ansprüche 1 bis 4, wobei ein Erholungsprozentanteil bei einem Falttest 70% oder mehr ist, wobei der Erholungsprozentanteil ein Verhältnis eines offenen Winkels um eine Faltlinie herum zu einer Zeit bezeichnet, wenn die geformte Matte an der Faltlinie belastet und so belassen wird, nachdem die geformte Matte um 180 Grad um eine gerade Linie herum gefaltet wurde, so dass sich Teile der thermoplastischen Harzfolie jeweils in einem Originalwinkel von 180 Grad gegenüberstehen.

**Revendications**

1. Tapis formé (10) qui est thermoformé de manière à avoir une forme conforme à l'intérieur d'un espace d'une automobile et qui est adapté de manière à se conformer à l'intérieur de l'espace, le tapis formé comprenant :

un corps non-tissé à haute élasticité (1) qui présente une épaisseur supérieure ou égale à 3,0 mm, un poids supérieur ou égal à 300 g/m² par surface unitaire, et une densité inférieure à 0,20 g/cm³ ; et
une feuille en résine thermoplastique (3) qui est stratifiée avec le corps non-tissé à haute élasticité (1) et qui est plus mince que le corps non-tissé à haute élasticité (1),

**caractérisé en ce que :**

le corps non-tissé à haute élasticité (1) est stratifié sur la feuille en résine thermoplastique (3) de telle sorte qu'une surface du corps non-tissé à haute élasticité (1) est orientée vers l'intérieur d'un espace d'une automobile, et **en ce que** une couche de surface de résistance à l'usure (2) est formée sur la surface du corps non-tissé à haute élasticité (1).

2. Tapis formé selon la revendication 1, dans lequel le corps non-tissé à haute élasticité (1) est un corps non-tissé aiguilleté qui comporte des fibres de polyester normales selon une proportion de 50 à 99 % en poids et des fibres de type polyester à faible point de fusion selon une proportion de 1 à 50 % en poids, les fibres de polyester normales ayant un diamètre de fibre allant de 3 à 15 dtx et une longueur allant de 40 à 120 mm, et les fibres de type polyester à faible point de fusion ayant un diamètre de fibre allant de 3 à 12 dtx et une longueur allant de 40 à 90 mm.

3. Tapis formé selon la revendication 2, dans lequel le corps non-tissé aiguilleté (1) contient, en tant que fibres de polyester normales, deux ou plusieurs types de fibres ayant des diamètres de fibre différents.

4. Tapis formé selon la revendication 1, dans lequel les fibres constituant la couche de surface (2) présentant une résistance à l'usure ont un ton différent de celui des fibres constituant d'autres parties du corps non-tissé aiguilleté (1), et un motif décoratif est formé on retirant partiellement les fibres constituant les autres parties du corps non-tiasé aiguilleté (1) sur la surface de la couche de surface (2) présentant une résistance à l'usure.

5. Tapis formé selon l'une quelconque des revendications 1 à 4, dans lequel un pourcentage de récupération suite à un essai de pliage est supérieur ou égal à 70 %, dans lequel le pourcentage de récupération indique un rapport d'un angle ouvert autour d'une ligne de pliage à un moment où le tapis formé est supporté au niveau de la ligne de pliage et mesuré après que le tapis formé a été plié sur 180 degrés autour d'une ligne droite de manière à ce que des parties de la fouille de résine thermoplastique soient orientées l'une face à l'autre, à un angle de 180 degrés original.

Fig. 1

Fig. 2

Road Noise on Smoth Road at 80 km/h
at Right Ear of Occupant on P-Seat

.... Comparative
Example

—— Fabrication
Example

SPL (dBA)

1/3-Octave Band Frequency (Hz)

Fig. 3

Fig. 4

**EP 1 640 207 B1**

## REFERENCES CITED IN THE DESCRIPTION

**Patent documents cited in the description**

- JP 8238967 A
- JP 2000178816 A
- US 6296075 B1